# FASCICULE DE BREVET EUROPEEN

(11) **EP 0 769 518 B1**
(45) Date de publication et mention de la délivrance du brevet: **10.05.2000**
(21) Numéro de dépôt: 96202678.7
(22) Date de dépôt: 25.09.1996
(51) Int. Cl.: C08K 5/00, C08K 5/3492, C08L 27/16

(54) **Composition réticulable de polymère du fluorure de vinylidène, procédé pour réticuler la composition et articles façonnés**
Härtbare Vinylidenfluoridpolymerzusammensetzung, Verfahren zu ihrer Vernetzung und Formteile
Crosslinkable vinylidene fluoride polymer composition, process for its crosslinking and formed parts thereof

(30) Priorité: 05.10.1995 FR 9511843
(43) Date de publication de la demande: 23.04.1997
(73) Titulaire: SOLVAY (Société Anonyme), 1050 Bruxelles (BE)
(72) Inventeur: Lambert, Yves-Julien, 1325 Chaumont-Gistoux (BE); Thulliez, Vincent, 1030 Bruxelles (BE); Laurent, Guy, 5020 Vedrin (BE)
(74) Mandataire: Eischen, Roland

(56) Documents cités:
- EP-A- 0 136 898
- EP-A- 0 608 940
- REV. GEN. CAOUT. PLAST., vol. 50, no. 11, 1973, PARIS, FR, pages 921-926, XP000573838 P. CHADEYRON ET AL.: "Conditions de radioréticulation d'un élastomère fluoré et évolution de ses propriétés rhéologiques avec la dose d'irradiation"

## Description

La présente invention concerne une composition réticulable de polymère du fluorure de vinylidène, un procédé pour réticuler la composition et des articles façonnés réticulés.

Grâce à leur souplesse plus élevée, par comparaison avec le polyfluorure de vinylidène homopolymère, les copolymères du fluorure de vinylidène et leurs mélanges avec le polyfluorure de vinylidène trouvent de nombreuses applications dans des domaines tels que le gainage de câbles électriques ou la confection de conduits souples pour combustibles. Dans ces applications, il est hautement souhaitable de pouvoir associer à leurs propriétés inhérentes, telles que souplesse, résistance élevée au feu et à la corrosion, des propriétés mécaniques et thermomécaniques (après vieillissement thermique) améliorées. EP-A-0 608 940 décrit des compositions polymériques destinées à la fabrication de câbles et tuyauteries flexibles qui contiennent un copolymère thermoplastique du VF₂ et au moins un autre monomère fluoré tel que le CTFE. Ce document ne décrit pas l'utilisation d'un promoteur de réticulation.

Il est connu que la réticulation des polymères et notamment des polymères thermoplastiques induit généralement une amélioration des propriétés mécaniques et de la résistance chimique, ainsi qu'une amélioration de leur imperméabilité. Toutefois, elle s'accompagne le plus souvent d'une rigidification relativement importante.

A. Vokal et M. Pallanova (cf 7th Symp. on Radiation Chemistry, 1990, pp. 311-315) ont étudié la réticulation d'homopolymères et de copolymères du fluorure de vinylidène (VF2) avec l'hexafluorpropylène (HFP) en présence de promoteurs de réticulation sous l'effet de rayonnements ionisants à des doses de 100 à 400 kGray (10 à 40 MRad). Cette étude montre que les copolymères VF2-HFP sont plus faciles à réticuler que l'homopolymère, c'est-à-dire que pour des doses d'irradiation identiques, les copolymères présentent des teneurs en gel (taux d'insolubles dans un solvant du copolymère non réticulé) nettement plus élevées que l'homopolymère. Néanmoins, la réticulation des copolymères VF2-HFP se fait au détriment de la contrainte à la rupture et de la souplesse des objets façonnés .

La présente invention vise à procurer une composition réticulable à base de polymères du fluorure de vinylidène qui ne présente pas cet inconvénient.

A cet effet, l'invention concerne une composition de polymère du fluorure de vinylidène réticulable sous l'effet d'un rayonnement ionisant, caractérisée en ce que le polymère du fluorure de vinylidène comprend un copolymère thermoplastique de fluorure de vinylidène et de chlortrifluoréthylène et en ce que la composition contient une quantité efficace de promoteur de réticulation.

Le polymère du fluorure de vinylidène présent dans les compositions réticulables selon l'invention peut être constitué essentiellement de copolymères thermoplastiques de VF2 et du CTFE. Il peut également être constitué d'un mélange de tels copolymères et d'homopolymère du fluorure de vinylidène. Dans ce cas, le copolymère du fluorure de vinylidène et du chlortrifluoréthylène et l'homopolymère du fluorure de vinylidène sont le plus souvent présents dans un rapport pondéral de 75/25 à 25/75.

Par copolymère thermoplastique du fluorure de vinylidène et du chlortrifluoréthylène, on entend désigner aux fins de la présente invention les copolymères du fluorure de vinylidène qui contiennent jusqu'à 25% en poids environ de chlortrifluoréthylène. Avantageusement, ils en contiennent au moins 10% en poids. De préférence, ils en contiennent de 12 à 22% en poids. Ces copolymères préférés présentent des températures de fusion d'environ 170 à environ 165°C.

La nature du promoteur de réticulation n'est pas critique. Celui-ci pourra donc être choisi parmi les promoteurs classiques de la réticulation sous l'effet d'un rayonnement ionisant. A titre d'exemples non limitatifs de promoteurs utilisables, on peut mentionner le cyanurate et l'isocyanurate de triallyle, les esters allyliques d'acides polycarboxyliques, tels que le phtalate de diallyle et le pyromellitate de tétrallyle, les bis-maléimides, tels que le N,N'-éthylène-bis-maléimide, les multiacrylates, tels que di-pentaérythritol hexaméthacrylate. On donne néanmoins la préférence au cyanurate et à l'isocyanurate de triallyle et plus particulièrement encore à ce dernier, lequel procure un effet bénéfique sur la lubrification des compositions réticulables selon l'invention.

Par quantité efficace de promoteur de réticulation, on entend désigner une quantité suffisante pour promouvoir la réticulation sous l'effet de rayonnements ionisants. Quoique cette quantité ne soit pas particulièrement critique, on utilise en général au moins 0,5 partie et le plus souvent au moins 1 partie en poids de promoteur de réticulation pour 100 parties en poids au total de polymère du fluorure de vinylidène. Généralement, on ne dépasse pas une teneur de 5 parties en poids. Avantageusement, le promoteur de réticulation est présent en une quantité de 2 à 4 parties pour 100 parties en poids au total de polymère du fluorure de vinylidène.

Des compositions particulièrement préférées selon l'invention contiennent un copolymère de fluorure de vinylidène et de chlortrifluoréthylène contenant de 12 à 22% en poids de chlortrifluoréthylène, éventuellement en mélange avec du polyfluorure de vinylidène homopolymère dans le rapport pondéral 70/30 à 30/70, et de 2 à 4 parties d'isocyanurate de triallyle (promoteur de réticulation) pour 100 parties en poids au total de polymère du fluorure de vinylidène.

Il est entendu qu'outre les constituants essentiels que constituent le copolymère du fluorure de vinylidène, éventuellement l'homopolymère du fluorure de vinylidène, et le promoteur de réticulation, les compositions réticulables selon l'invention peuvent comprendre tous les ingrédients usuels de mise en oeuvre des compositions à base de polymères fluorés, tels que par exemple des lubrifiants, de même que des additifs divers tels que par exemple des charges, des pigments et/ou des colorants, des agents ignifuges ou fumicides.

Les compositions réticulables selon l'invention peuvent être fabriquées de toute manière connue et usuelle pour mélanger des polymères et leurs divers ingrédients de mise en oeuvre. Elles peuvent, par exemple, être fabriquées par mélange, en une seule ou en plusieurs opérations, de tous les ingrédients dans un mélangeur rapide à faible température pour produire des compositions non prégélifiées se présentant à l'état de poudre, généralement appelées prémélanges ("premix"). Elles peuvent également être fabriquées par mélange, en une seule ou en plusieurs opérations, de tous les ingrédients dans une extrudeuse dans laquelle le mélange est porté à une température au moins égale à la température de fusion du polymère du fluorure de vinylidène pour produire des mélanges prégélifiés, généralement appelés "compound". Avantageusement, les compositions réticulables selon l'invention se présentent à l'état de compound et en particulier à l'état de granules.

Les compositions selon l'invention peuvent être mises en oeuvre par toutes les techniques classiques de transformation des matières plastiques à l'état fondu, telles que l'extrusion et l'injection. Elles conviennent tout particulièrement pour la mise en oeuvre par extrusion.

Les compositions réticulables selon l'invention se laissent aisément réticuler sous air sous l'effet de doses relativement faibles de rayons ionisants.

L'invention concerne également un procédé pour la réticulation des compositions selon l'invention. Selon ce procédé, on irradie la composition sous air au moyen d'un rayonnement ionisant à une dose qui n'excède pas 100 kGray. Le plus souvent, cette dose s'élève à 10 kGray au moins. D'excellents résultats sont obtenus avec des doses d'irradiation de 50 à 90 kGray.

La nature du rayonnement ionisant n'est pas critique pour l'exécution du procédé de réticulation selon l'invention. Le rayonnement ionisant peut être constitué, par exemple, par des rayons β (électrons accélérés) ou encore par des rayons λ (émis par une source de cobalt). Néanmoins, en raison de leur plus grande accessibilité, la préférence est donnée aux rayons β.

Les compositions réticulées selon le procédé de l'invention présentent des taux de réticulation élevés. La réticulation se traduit en pratique par un taux de gel. Celui-ci s'évalue par immersion d'un échantillon de polymère irradié dans un solvant bouillant qui solubilise la fraction non réticulée de polymère. La teneur en matières insolubles, exprimée en %, correspond au taux de gel représentatif du taux de réticulation. Généralement le taux de gel des compositions réticulées selon le procédé de l'invention (évalué par immersion pendant trente minutes dans le diméthylformamide bouillant) s'élève à plus de 50% et, le plus souvent, à plus de 60%.

Un avantage des compositions réticulées selon l'invention réside dans le fait qu'elles présentent une contrainte à la rupture en traction améliorée par comparaison avec une composition identique non réticulée, y compris après un vieillisement thermique sévère, par exemple à des températures excédant 200°C. Il est vrai que les compositions réticulées présentent une souplesse réduite par comparaison avec une composition identique non réticulée. Néanmoins, la souplesse des compositions réticulées reste supérieure à celle d'un homopolymère du fluorure de vinylidène non réticulé et par ailleurs largement suffisante pour satisfaire aux normes imposées dans certains domaines d'application, tels que celui de la câblerie.

Il a en outre été constaté que lorsqu'on soumet la composition réticulée à un vieillissement thermique, on améliore notablement la souplesse au point de pouvoir atteindre des valeurs équivalentes sinon supérieures à celles des compositions non réticulées.

Suivant un mode de réalisation particulier du procédé de réticulation selon l'invention, on soumet la composition après irradiation à un traitement thermique. Ce traitement thermique peut s'effectuer à des températures très variables et pendant des laps de temps également variables. Pour fixer les idées, la température s'élèvera généralement à au moins 80°C, le plus souvent, à au moins 100°C. Celle-ci n'excèdera généralement pas 215°C, le plus souvent elle n'excèdera pas 200°C. La durée du traitement thermique peut aller de quelques heures à quelques jours. Les conditions optimales du traitement thermique, température et durée, s'évalueront avantageusement par voie expérimentale dans chaque cas particulier.

Les compositions réticulables selon l'invention sont aptes à être façonnées en des articles très divers qui, après réticulation et vieillissement thermique, allient d'excellentes propriétés mécaniques à une excellente souplesse.

Du fait de ces propriétés intéressantes, les compositions réticulables selon l'invention conviennent particulièrement pour le gainage de câbles électriques, tels que des câbles de communication, ainsi que pour l'extrusion de tuyaux destinés au transport du combustible dans les voitures automobiles ("fuel lines") ou encore de structures multicouches destinées au transport du pétrole, notamment en milieu marin ("off shore").

L'invention concerne également les articles façonnés réticulables issus de la transformation à l'état fondu de la composition réticulable selon l'invention. Elle concerne aussi les articles façonnés réticulés issus de la réticulation au moyen du procédé de l'invention des articles façonnés réticulables.

Ces articles façonnés réticulables et réticulés sont constitués, de préférence, de gaines pour câbles électriques et de conduits pour produits pétroliers.

Les exemples qui suivent sont destinés à illustrer l'invention.

Dans tous les exemples, le promoteur de réticulation utilisé est de l'isocyanurate de triallyle mis en oeuvre à raison de 3 parties pour 100 parties en poids de polymère du fluorure de vinylidène.

Les exemples 1 à 9 concernent des compositions réticulables (exemples 1, 6 et 8) et des compositions réticulées (exemples 2 à 5 et 7) dans lesquelles le polymère du fluorure de vinylidène est un copolymère de fluorure de vinylidène et de chlortrifluoréthylène (copolymère VF₂-CTFE).

Les exemples 10 et 11 concernent une composition réticulable (exemple 10) et une composition réticulée (exemple 11) dans lesquelles le polymère du fluorure de vinylidène est constitué d'un mélange de copolymère de fluorure de vinylidène et de chlortrifluoréthylène (VF₂ - CTFE) et de polyfluorure de vinylidène homopolymère (PVDF). L'indice de fluidité ("melt index") de l'homopolymère mesuré à 230°C sous une charge de 5 kg s'élève à 1,5 g/10 min.

Dans les exemples 1 à 7, 10 et 11 le copolymère du fluorure de vinylidène contient 15% en poids de chlortrifluoréthylène et sa température de fusion s'élève à 168°C.

Dans les exemples 1 à 5, ce copolymère présente un indice de fluidité ("melt index") à 230°C sous 2,16 kg de 7,1g/10min. Dans les exemples 6 et 7, cet indice s'élève à 4,7 g/10 min. Dans les exemples 10 et 11, ce copolymère présente un indice de fluidité à 230°C sous 2,16kg de 5 g/10 min.

Dans les exemples 8 et 9, le copolymère du fluorure de vinylidène contient 20% en poids de chlortrifluoréthylène, sa température de fusion s'élève à 165°C. Ce copolymère présente un indice de fusion (tel que défini ci-dessus) de 6,5 g/10min.

Dans les exemples 1 à 5, dont les résultats figurent au Tableau I, on a évalué différentes propriétés mécaniques en traction à 23°C -200mm/min (selon ASTM D 638) sur une feuille d'une épaisseur de 0,5 mm fabriquée par moulage par compression. Les granules mis en oeuvre pour mouler la feuille ont été obtenus par extrusion de la composition suivante, toutes les parties étant exprimées en poids :

| | |
|---|---|
| copolymère VF2-CTFE | 100 parties |
| isocyanurate de triallyle | 3 parties |

Le moulage par compression s'est effectué dans les conditions suivantes :
- malaxage pendant 10 minutes à 200°C sur un malaxeur à rouleaux;
- pressage pendant 2 min à 200°C dans une presse sous 40 bars;
- pressage pendant 10 min à température ambiante dans une presse sous 50 bars.

Des échantillons de feuille ont été soumis à une irradiation au moyen de doses variables de rayons β, sauf à l'exemple 1, de référence. Les feuilles réticulées par irradiation ont par ailleurs été soumises à un traitement thermique à 212°C pendant 7 jours.

Le Tableau I récapitule les résultats des mesures. Le taux de gel exprime la quantité de matières solides insolubles, exprimée en %, après immersion du polymère dans du diméthylformamide bouillant.

La comparaison des résultats de l'exemple 1 (composition réticulable), de référence, avec les résultats des exemples 2 à 5 (compositions réticulées) montre à suffisance l'amélioration des propriétés mécaniques en traction, telles que la contrainte au yield et à la rupture. Elle montre également que le traitement thermique à 212°C pendant 7 jours consécutifs à la réticulation induit une amélioration appréciable du module d'élasticité et de l'allongement à la rupture dont les valeurs se rapprochent, voire surpassent ceux de la référence, tout en maintenant une contrainte à la rupture supérieure à celle-ci.

Dans les exemples 6 à 9, dont les résultats figurent au Tableau II, on a évalué différentes propriétés mécaniques en traction à 23°C - 50 mm/min (selon ASTM D 638) sur un tube extrudé dont le diamètre extérieur s'élève à 3mm et l'épaisseur de la paroi à 0,5 mm.

Les granules mis en oeuvre pour extruder le tube ont été obtenus par extrusion de la composition suivante, toutes les parties étant exprimées en poids :

| | |
|---|---|
| copolymère VF2-CTFE | 100 parties |
| isocyanurate de triallyle | 3 parties |

L'extrusion du tube s'est effectuée à la vitesse de 20m/min sur une ligne de câblerie avec une vis présentant les caractéristiques suivantes :
- L= 24D
- diamètre : 30mm
- taux de compression : 30

Les conditions thermiques de l'extrusion ont été les suivantes :
- profil de températures :
   zone 1 : 175°C
   zone 2 : 180°C
   zone 3 : 190°C
   zone 4 : 200°C
   adaptateur : 210°C
   tête : 210°C
   filière : 210°C

La température de la matière à la sortie de l'extrudeuse s'est élevée à 210°C et les tubes extrudés ont été refroidis dans de l'eau se trouvant à 20°C.

Des échantillons de tube ont été sousmis à une irradiation au moyen de rayons β à la dose 75 kGray (exemples 7 et 9). Les échantillons de tube selon les exemples 6 et 8 (compositions réticulables), de référence, n'ont pas été irradiés. Les échantillons de tubes irradiés et réticulés ont par ailleurs été soumis à un traitement thermique à 120°C pendant 1 jour.

Le Tableau II récapitule les résultats des mesures effectuées.

La comparaison des résultats de l'exemple 6, de référence, avec ceux de l'exemple 7 et, par ailleurs, de l'exemple 8, de référence, avec ceux de l'exemple 9 montre l'amélioration appréciable des propriétés mécaniques en traction et, notamment, l'amélioration de la contrainte au yield et à la rupture après un traitement thermique à 120°C pendant 1 jour.

Dans les exemples 10 et 11, dont les résultats figurent au Tableau III, on a mesuré la contrainte et l'allongement au yield ( = au seuil d'écoulement) en traction à 23°C et à 50mm/min (selon la norme ASTM D 638) sur des éprouvettes ISO 2 de 2 mm d'épaisseur prélevées dans des bandes extrudées. Les granules mis en oeuvre pour extruder les bandes ont été obtenus par extrusion de la composition suivante, toutes les parties étant exprimées en poids :

| | |
|---|---|
| copolymère VF2-CTFE | 66 parties |
| homopolymère PVDF | 33 parties |
| carbonate de calcium précipité | 0,1 partie |
| cire de polyéthylène | 0,2 partie |
| isocyanurate de triallyle | 3 parties |

L'extrusion des bandes s'est effectuée sur une extrudeuse monovis ( diamètre: 19 mm; L = 25D) avec un profil de températures s'étalant de 170 à 210°C.

Pour la réalisation de l'exemple 10 (composition réticulable), de référence, les échantillons de bande n'ont pas été irradiés, ni soumis à un traitement thermique.

Pour la réalisation de l'exemple 11 (composition réticulée), des échantillons de bande ont été soumis à une irradiation au moyen de rayons β à la dose de 75 kGray ( en trois passes de 25 kGray) et ensuite à un traitement thermique: 1 jour à 120°C (traitement thermique à proprement parler) suivi de 60 jours à 212°C ( vieillissement thermique). Avant traitement thermique, le taux de gel des échantillons réticulés (évalué par immersion pendant 30 minutes dans le diméthylformamide bouillant) s'élevait à 78%.

Le Tableau III récapitule les résultats des mesures. La comparison des résultats de l'exemple 10 avec ceux de l'exemple 11 montre à suffisance que la composition réticulée conserve de bonnes propriétés à l'écoulement après un vieillissement thermique de 60 jours à 212°C.

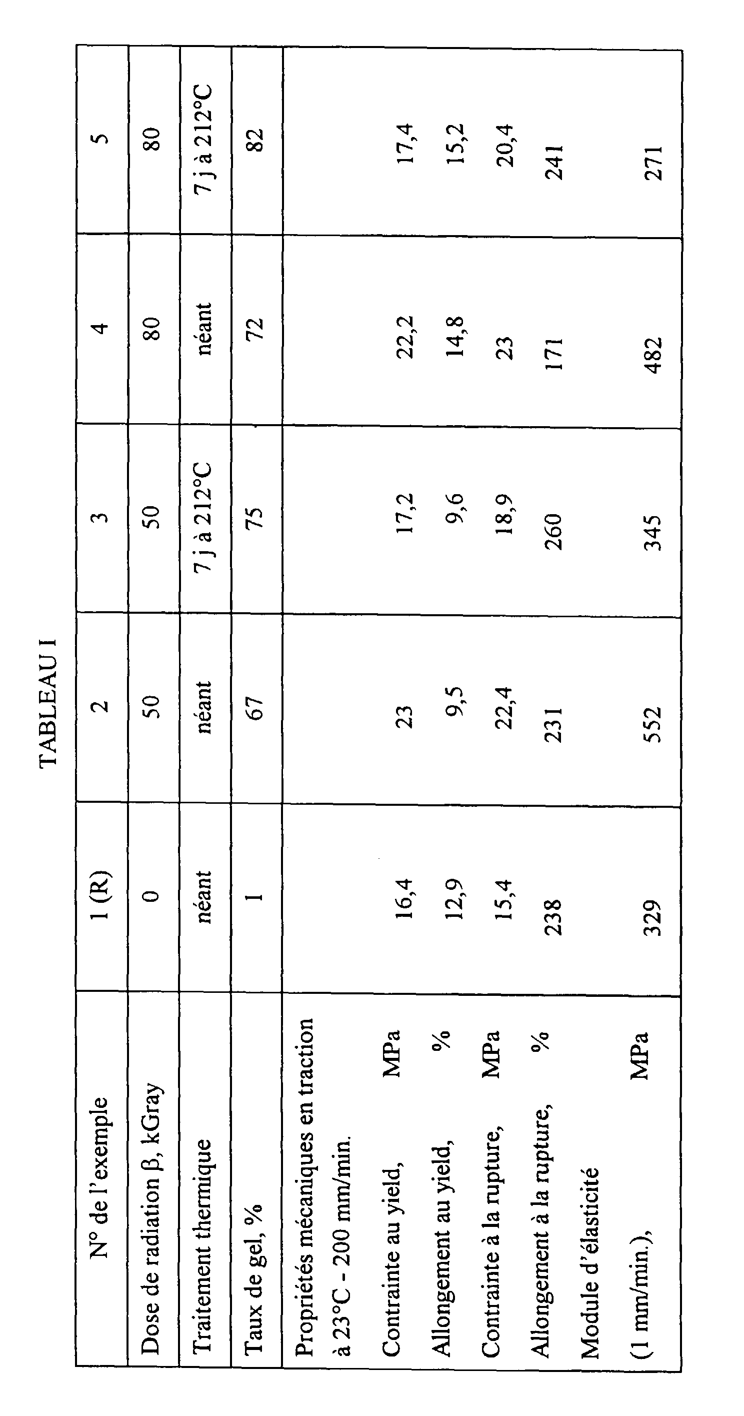

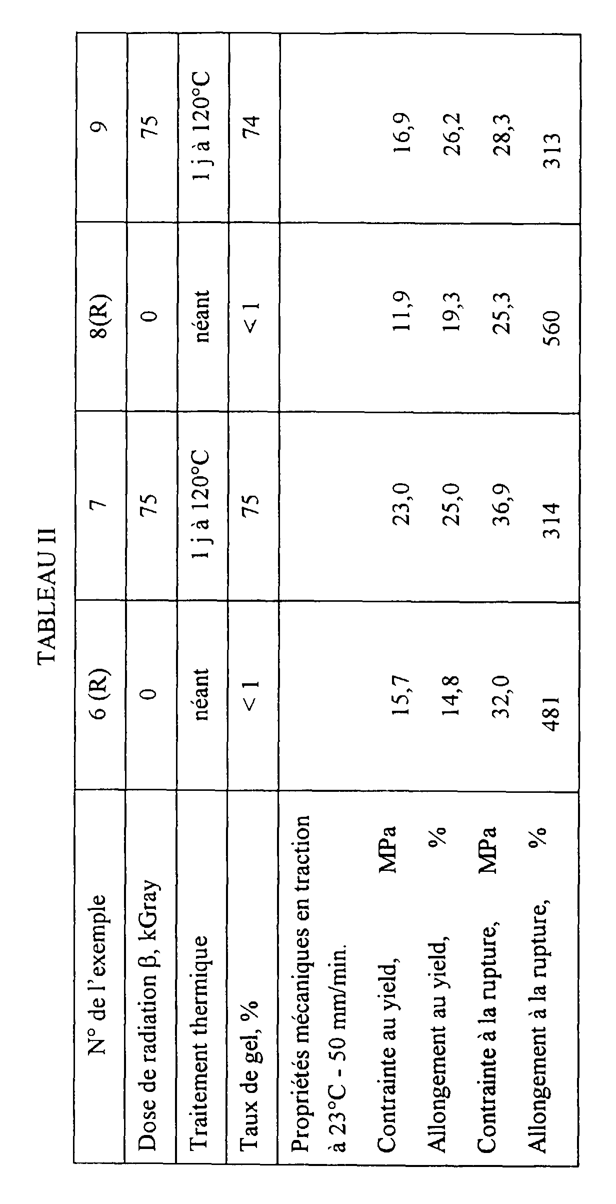

**TABLEAU III**

| N° de l'exemple | 10(R) | 11 |
|---|---|---|
| Dose de radiation β, kGray | néant | 75 |
| Traitement thermique | néant | 1 j. à 120°C *, puis |
| | | 60 j. à 212°C ** |
| Taux de gel, % | < 1 | 82 * |
| | | 83** |

| Propriétés mécaniques en traction à 23°C - 50mm/min. | | |
|---|---|---|
| Contrainte au yield, MPa | 33,5 | 35 |
| Allongement au yield, % | 11,5 | 11 |

## Revendications

1. Composition de polymère du fluorure de vinylidène réticulable sous l'effet d'un rayonnement ionisant, caractérisée en ce que le polymère du fluorure de vinylidène comprend un copolymère thermoplastique de fluorure de vinylidène et de chlortrifluoréthylène comprenant jusqu'à 25% en poids de chlortrifluoréthylène et en ce que la composition contient une quantité efficace de promoteur de réticulation.

2. Composition réticulable selon la revendication 1, caractérisée en ce que le polymère du fluorure de vinylidène est constitué essentiellement d'un copolymère de fluorure de vinylidène et de chlortrifluoréthylène.

3. Composition réticulable selon la revendication 1, caractérisée en ce que le polymère du fluorure de vinylidène est constitué d'un mélange d'une part de copolymère thermoplastique de fluorure de vinylidène et de chlortrifluoréthylène et d'autre part de polyfluorure de vinylidène homopolymère dans un rapport pondéral de 75/25 à 25/75.

4. Composition réticulable selon les revendications 1 à 3, caractérisée en ce que le copolymère de fluorure de vinylidène et de chlortrifluoréthylène contient de 10 à 25% en poids de chlortrifluoréthylène

5. Composition réticulable selon les revendications 1 à 4, caractérisée en ce que le promoteur de réticulation est présent en une quantité d'au moins 0,5 partie et qui n'excède pas 5 parties pour 100 parties en poids au total de polymère de fluorure de vinylidène.

6. Composition réticulable selon les revendications 1 à 5, caractérisée en ce que le promoteur de réticulation est choisi parmi le cyanurate et l'isocyanurate de triallyle.

7. Procédé pour la réticulation de la composition selon les revendications 1 à 6, caractérisé en ce qu'on irradie la composition sous air au moyen d'un rayonnement ionisant à une dose d'au moins 10 kGray et qui n'excéde pas 100 kGray.

8. Procédé pour la réticulation selon la revendication 7, caractérisé en ce que après irradiation on soumet la composition à un traitement thermique.

9. Articles façonnés réticulables issus de la transformation à l'état fondu de la composition selon les revendications 1 à 6.

10. Articles façonnés réticulés issus de la réticulation au moyen du procédé de l'invention selon la revendication 7 ou 8 des articles façonnés selon la revendication 9.

## Patentansprüche

1. Vinylidenfluoridpolymerzusammensetzung, die unter der Wirkung einer ionisierenden Strahlung vernetzbar ist, dadurch gekennzeichnet, dass das Vinylidenfluoridpolymer ein thermoplastisches Vinylidenfluorid/Chlortrifluorethylen-Copolymer umfasst, das bis zu 25 Gew.-% Chlortrifluorethylen umfasst, und dadurch, dass die Zusammensetzung eine wirksame Menge an Vernetzungsbeschleuniger enthält.

2. Vernetzbare Zusammensetzung gemäss Anspruch 1, dadurch gekennzeichnet, dass das Vinylidenfluoridpolymer im wesentlichen aus einem Vinylidenfluorid/Chlortrifluorethylen-Copolymer besteht.

3. Vernetzbare Zusammensetzung gemäss Anspruch 1, dadurch gekennzeichnet, dass das Vinylidenfluoridpolymer aus einem Gemisch von einerseits thermoplastischem Vinylidenfluorid/Chlortrifluorethylen-Copolymer und andererseits von Polyvinylidenfluorid-Homopolymer in einem Gewichtsverhältnis von 75/25 bis 25/75 besteht.

4. Vernetzbare Zusammensetzung gemäss den Ansprüchen 1 bis 3, dadurch gekennzeichnet, dass das Vinylidenfluorid/Chlortrifluorethylen-Copolymer 10 bis 25 Gew.-% Chlortrifluorethylen enthält.

5. Vernetzbare Zusammensetzung gemäss den Ansprüchen 1 bis 4, dadurch gekennzeichnet, dass der Vernetzungsbeschleuniger in einer Menge von wenigstens 0,5 Gewichtsteilen, die 5 Gewichtsteile nicht überschreitet, auf insgesamt 100 Gew.-Teile Vinylidenfluoridpolymer vorhanden ist.

6. Vernetzbare Zusammensetzungen gemäss den Ansprüchen 1 bis 5, dadurch gekennzeichnet, dass der Vernetzungsbeschleuniger unter Triallylcyanurat und -isocyanurat ausgewählt ist.

7. Verfahren zur Vernetzung der Zusammensetzung gemäss den Ansprüchen 1 bis 6, dadurch gekennzeichnet, dass man die Zusammensetzung unter Luft mittels einer ionisierenden Strahlung mit einer Dosis von wenigstens 10 kGray, die 100 kGray nicht überschreitet, bestrahlt.

8. Verfahren zur Vernetzung gemäss Anspruch 7, dadurch gekennzeichnet, dass man die Zusammensetzung nach Bestrahlung einer thermischen Behandlung unterzieht.

9. Vernetzbare Formteile, die aus der Umwandlung im geschmolzenen Zustand der Zusammensetzung gemäss den Ansprüchen 1 bis 6 hervorgegangen sind.

10. Vernetzte Formteile, die aus der Vernetzung mittels des Verfahrens der Erfindung gemäss Anspruch 7 oder 8 der Formteile gemäss Anspruch 9 hervorgegangen sind.

## Claims

1. Vinylidene fluoride polymer composition which can be crosslinked under the effect of an ionizing radiation, characterized in that the vinylidene fluoride polymer comprises a thermoplastic copolymer of vinylidene fluoride and of chlorotrifluoroethylene comprising up to 25% by weight of chlorotrifluoroethylene and that the composition contains an effective amount of crosslinking promoter.

2. Crosslinkable composition according to Claim 1, characterized in that the vinylidene fluoride polymer is composed essentially of a copolymer of vinylidene fluoride and of chlorotrifluoroethylene.

3. Crosslinkable composition according to Claim 1, characterized in that the vinylidene fluoride polymer is composed of a mixture, on the one hand, of thermoplastic copolymer of vinylidene fluoride and of chlorotrifluoroethylene and, on the other hand, of poly(vinylidene fluoride) homopolymer in a ratio by weight of 75/25 to 25/75.

4. Crosslinkable composition according to Claims 1 to 3, characterized in that the copolymer of vinylidene fluoride and of chlorotrifluoroethylene contains from 10 to 25% by weight of chlorotrifluoroethylene.

5. Crosslinkable composition according to Claims 1 to 4, characterized in that the crosslinking promoter is present in an amount of at least 0.5 part and which does not exceed 5 parts per 100 parts by weight in total of vinylidene fluoride polymer.

6. Crosslinkable composition according to Claims 1 to 5, characterized in that the crosslinking promoter is chosen from triallyl cyanurate and triallyl isocyanurate.

7. Process for the crosslinking of the composition according to Claims 1 to 6, characterized in that the composition is irradiated under air by means of an ionizing radiation at a dose of at least 10 kGray and which does not exceed 100 kGray.

8. Process for the crosslinking according to Claim 7, characterized in that, after irradiation, the composition is subjected to heat treatment.

9. Crosslinkable shaped articles resulting from the conversion in the molten state of the composition according to Claims 1 to 6.

10. Crosslinked shaped articles resulting from the crosslinking by means of the process of the invention according to Claims 7 or 8 of the shaped articles according Claim 9.
